# DEMANDE DE BREVET EUROPEEN

(11) **EP 0 909 109 A1**
(43) Date de publication de la demande: **14.04.1999**
(21) Numéro de dépôt: 98402499.2
(22) Date de dépôt: 08.10.1998
(51) Int. Cl.: H04Q 11/04, H04L 1/00

(54) **Procédé de codage par blocs d'une cellule ATM utilisant un code produit**

(30) Priorité: 09.10.1997 FR 9712594
(71) Demandeur: ALCATEL, 75008 Paris (FR)
(72) Inventeur: Fang, Juing, 92300 Levallois (FR); Buda, Fabien, 75006 Paris (FR)
(74) Mandataire: Lamoureux, Bernard

(57) **Abrégé**

L'invention concerne un procédé de codage d'un bloc de données comprenant une première et une deuxième zones, le procédé étant de type consistant à appliquer un codage produit à ce bloc.

Il comprend un premier codage bloc appliqué à la première zone, un deuxième codage bloc appliqué à la deuxième zone et un troisième codage bloc appliqué aux données obtenues par les deux premiers codage, dans un sens perpendiculaire aux deux premiers codes, les trois codages étant réalisés à l'aide de codes BCH, la première zone étant protégée par un code plus puissant que la deuxième zone.

Le bloc est constitué par une cellule ATM, la première zone correspondant à l'entête de la cellule ATM et la deuxième zone au champ de données utiles de cette cellule ATM.

## Description

Le domaine de l'invention est celui du codage de données. Plus précisément, la présente invention concerne un procédé permettant de coder des blocs de données, chaque bloc comprenant au moins une première et une deuxième zones, par exemple un entête et une zone de données utiles. L'invention s'applique particulièrement au codage de cellules ATM.

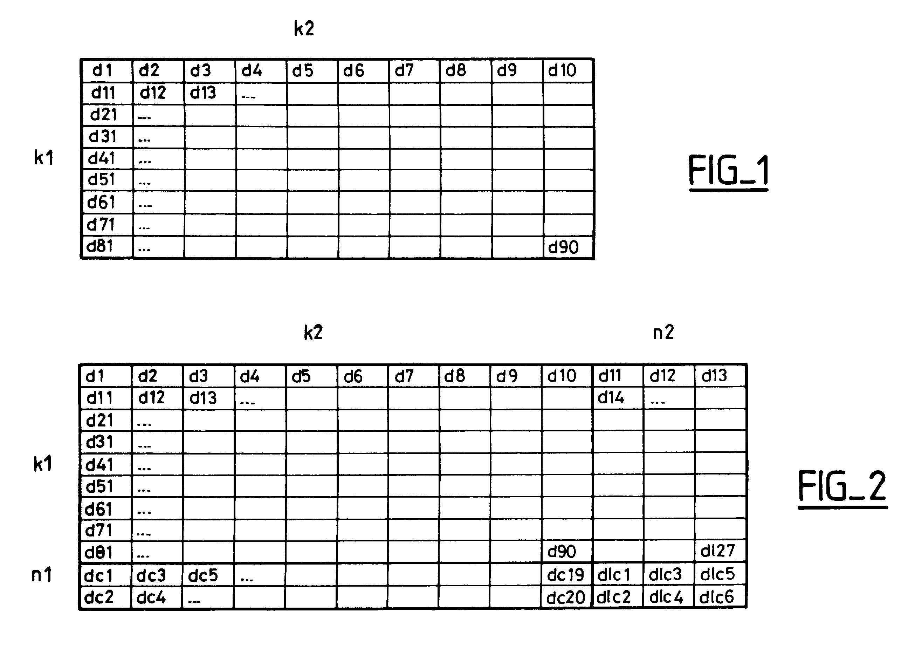

Le codage par code produit est un codage connu permettant d'assurer un codage des données à transmettre, par exemple par voie radio. Les figures 1 et 2 montrent le principe d'un codage produit.

On considère ici un bloc de 90 données (bits) à coder, ces données étant référencées d1 à d90. Les données sont rangées dans un tableau comme représenté sur la figure 1, le tableau comprenant un nombre k1 de 9 lignes et un nombre k2 de 10 colonnes. Le codage par code produit consiste à appliquer un premier codage bloc (appelé code de ligne) à chacune des k1 lignes pour obtenir des bits supplémentaires notés dli (FIG.2) correspondant aux codages de ces k1 lignes. A titre d'exemple, les données dl1, dl2 et dl3 correspondent au codage des données d1 à d10. En fonction du codage bloc employé, on obtient ainsi k1*n2 bits supplémentaires (ici n2 = 3). Ces bits sont rangés à la suite des données dont ils sont issus, ce qui permet d'obtenir un tableau de k1 lignes et de k2+n2 colonnes.

A la suite de ce premier codage, un second codage bloc (appelé code de colonne) est appliqué aux k2+n2 colonnes, afin de générer un nombre n1*(k2+n2) de bits supplémentaires. Dans la figure 2, on génère ainsi 20 bits supplémentaires (dci) à partir du codage des k2 colonnes et 6 autres bits supplémentaires (dlci) à partir du codage des n2 colonnes. La valeur de n1 est ici égale à 2. A titre d'exemple, le codage des données de la première colonne du tableau de la figure 1 permet d'obtenir les bits dc1 et dc2.

Un code produit est défini à partir des paramètres (n1, k1) et (n2, k2) des codes de ligne et de colonne.

Dans le cas de transmission de cellules ATM, il est souhaitable que l'entête soit mieux protégé que le champ de données utiles car cet entête comprend notamment l'adresse du destinataire de la cellule. En cas de forte détérioration de cette adresse lors de la transmission, le paquet transmis n'arrive non seulement pas chez son destinataire mais il n'est de plus pas possible de prévenir ce destinataire qu'un paquet qui lui était destiné ne lui est pas parvenu. Par ailleurs, lorsque le paquet arrive à un noeud inconnu, le système de routage se trouve perturbé.

La présente invention a notamment pour objectif de remédier à ces inconvénients.

Plus précisément, un des objectifs de l'invention est de fournir un procédé de codage de cellules ATM destinées à être transmises, par exemple par voie hertzienne, ce procédé permettant de mieux protéger l'entête de la cellule que le champ de données utiles.

Cet objectif, ainsi que d'autres qui apparaîtront par la suite, est atteint grâce à un procédé conforme à le revendication 1.

D'autres caractéristiques et avantages de l'invention apparaîtront à la lecture de la description suivante d'un mode de mise en oeuvre préférentiel, donné à titre illustratif et non limitatif, et des dessins annexés dans lesquels :
- les figures 1 et 2 montrent le principe d'un codage produit ;
- la figure 3 représente une cellule ATM ;
- la figure 4 montre le principe de codage selon l'invention appliqué à une cellule ATM ;
- la figure 5 montre la généralisation du procédé de codage selon l'invention à des cellules ATM comportant un nombre de bits variable.

Les figures 1 et 2 ont été décrites précédemment en référence à l'état de la technique.

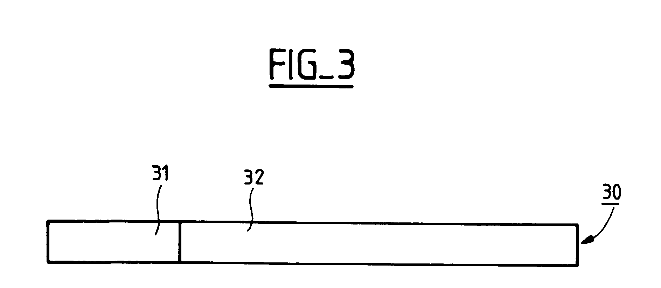

La figure 3 représente une cellule ATM, référencée 30. La cellule 30 comporte un entête 31 contenant 40 bits (5 octets) et un champ de données utiles 32 contenant 384 bits (48 octets). Les 5 octets de l'entête comprennent six champs dont un octet de CRC, généralement appelé HEC (Header Error Control).

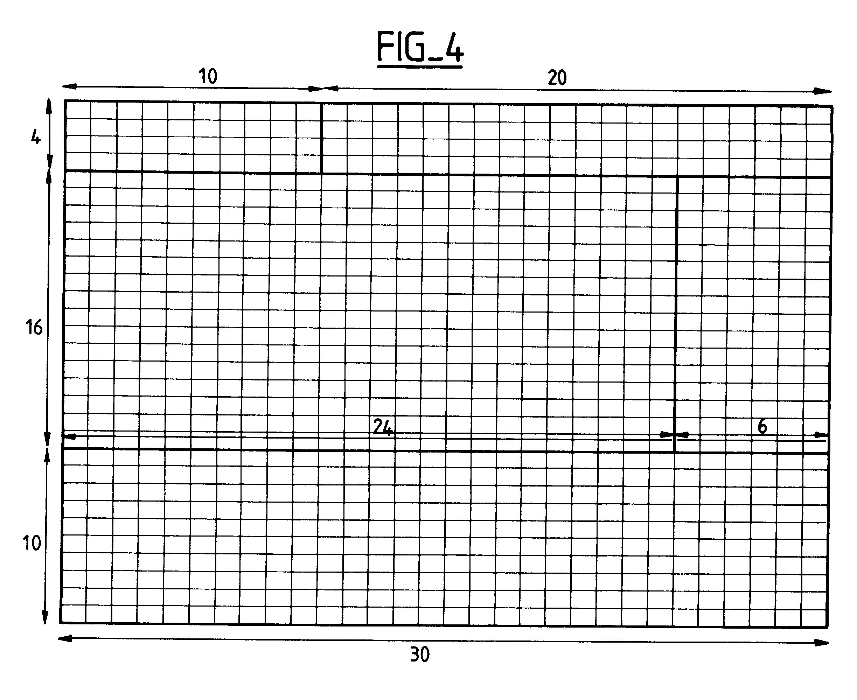

La figure 4 montre le principe du codage selon l'invention appliqué à une telle cellule ATM.

L'invention propose de renforcer le codage de l'entête 31 de la cellule ATM par rapport au codage des données utiles en appliquant des codages différents à ces deux zones. Plus précisément, les 40 bits d'entête sont rangés dans une zone qui sera fortement protégée par un code de ligne C(N_{L}, K_{L}) et les 384 bits de données utiles sont rangés dans une autre zone qui sera moins fortement protégée par un code de ligne C(N_{L}', K_{L}'). Après avoir appliqué les codes de ligne, un code de colonne C(N_{C}, K_{C}) est appliqué sur toutes les colonnes de la matrice. Préférentiellement, comme il sera vu plus loin, le code C(N_{L}, K_{L}) est un sous-code du code C(N_{L}', K_{L}').

A titre d'exemple, comme montré sur la figure 4, les 40 bits d'entête sont rangés dans 4 lignes de 10 colonnes et les 384 bits de données utiles dans 16 lignes de 24 colonnes.

Ensuite, la première étape du procédé, appelée étape -a-, consiste à appliquer un premier codage bloc de ligne aux bits d'entête, ce premier codage bloc étant un codage BCH de type (30, 10). On obtient ainsi, pour chaque octet, 20 bits codés qui sont rangés à la suite de ces octets (dans une matrice 4*20). La seconde étape du procédé, appelée étape -b-, consiste à appliquer un deuxième codage bloc de ligne, ici de type (30, 24), aux seize 24-uplets de bits utiles, ce qui permet d'obtenir 16*6 bits codés rangés à la suite des 24-uplets. On obtient ainsi un tableau de 20 lignes et 30 colonnes.

Pour la réalisation du codage produit, une étape supplémentaire, appelée étape -c-, consiste à appliquer un troisième codage bloc, ici un code de colonne, aux données obtenues lors de ces étapes a et b. Ce troisième codage bloc est ici de type (20, 30) et permet d'obtenir 30 mots de code de 10 bits.

Le résultat obtenu est donc un tableau de 30 lignes et de 30 colonnes contenant non seulement les informations sources à transmettre mais également les bits codés obtenus selon les étapes a, b, et c.

Les codes utilisés pour construire les codes produit dans la présente invention sont les codes binaires BCH et cycliques binaires, (n, k), leurs étendus (n+1, k), et leurs expurgés (n, k-1), ainsi que les codes raccourcis de ces codes (n-s, k-s), (n-s, k-1-s) et (n+1-s, k-s) avec k, n et s entiers et s<k.

Les codes étendus sont obtenus par l'ajoût d'un bit de parité à chaque mot d'un code cyclique ayant sa distance minimale de Hamming impaire. Autrement dit son polynôme générateur g(x) ne contient pas le facteur (x+1). Un code expurgé est obtenu à partir d'un code cyclique ayant g(x) comme polynôme générateur, g(x) ne contenant pas le facteur (x+1). Le code expurgé est obtenu par le nouveau polynôme générateur (x+1).g(x).

Les codes étendus et les codes expurgés binaires ont tous leurs mots de code de poids pair. Le code expurgé obtenu par (x+1).g(x) est un sous-code du code généré par g(x). Tous les codes raccourcis sont des sous-codes de codes linéaires en bloc, mais un code étendu n'est pas un sous-code de son code principal.

Le code C(n, k) est sous-code d'un code C(n, k'), avec k<k', si tous les mots de code C(n, k) appartiennent aussi au code C(n, k'). Dans le cas de code en bloc linéaire, ceci signifie que le sous-code C(n, k) est un sous-espace du code C(n, k'). Pour les codes cycliques, le code principal C(n, k') a ses racines comprises dans l'ensemble de racines de son sous-code C(n, k). Autrement dit, si le code C(n, k') est généré par son polynôme générateur g(x), le code C(n, k) généré par g(x) est son sous-code si g'(x) divise g(x) dans le domaine GF(q)/[pₘ(x)], où GF(q) est le corps de Galois fini symbolique des codes C(n, k) et C(n, k'), et pₘ(x) est le polynôme qui définit le corps fini dans lequel se trouvent les racines des polynômes générateurs de ces codes cycliques. Si cette propriété est satisfaite, toutes les lignes de la matrice sont les mots du code principal C(N_{L}, K_{L}).

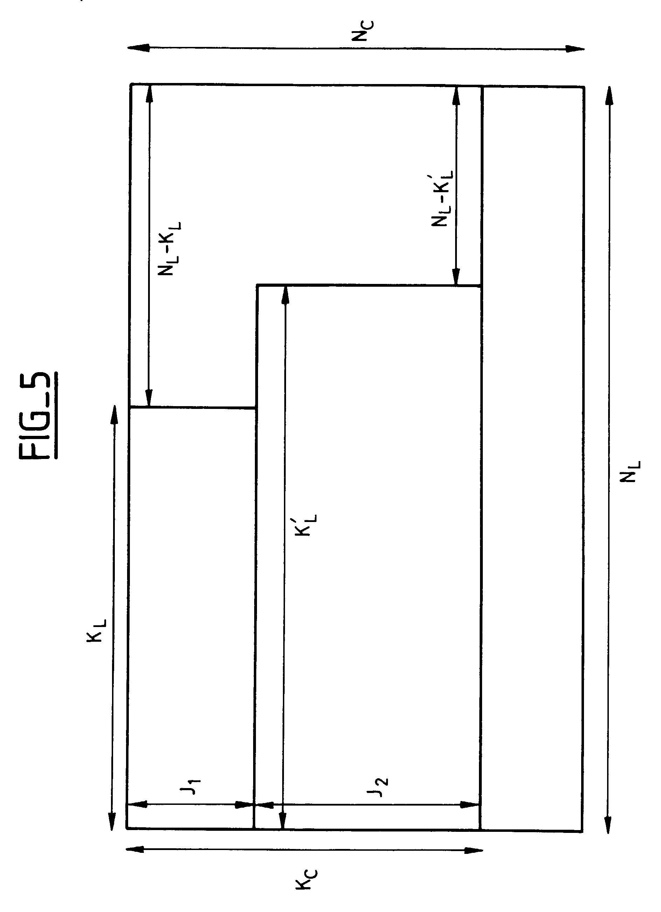

En adoptant les notation suivantes, conformes à la représentation de la figure 5 :
- J₁ est le nombre de lignes du tableau dans lequel sont rangés les bits d'entête ;
- K_{L} est le nombre de colonnes du tableau dans lequel sont rangés les bits d'entêté ;
- J₂ est le nombre de lignes du tableau dans lequel sont rangés les bits utiles ;
- K_{L}' est le nombre de colonnes du tableau dans lequel sont rangés les bits utiles ;
- K_{c} est égal à J₁ + J₂ ;
- N_{L} est le nombre de colonnes du tableau après avoir appliqué les codages lignes des étapes a et b ;
- N_{c} est le nombre de lignes du tableau après avoir appliqué le codage colonne de l'étape c,
on a : le premier code de ligne appliqué est (N_{L}, K_{L}), ce code étant appliqué sur les J₁ lignes, le deuxième code de ligne appliqué est (N_{L}, K_{L}'), ce code étant appliqué sur les J₂ lignes, le code de colonne appliqué est (N_{c}, K_{c}), ce code étant appliqué sur les N_{L} colonnes.

Les codes utilisés sont ici des codes BCH (31, k), éventuellement étendus (32, k), et expurgés (31, k-1), ainsi que tous leurs codes raccourcis (31-s, k-s), (32-s, k-s) et (31-s, k-s-1), avec d la distance BCH et s un entier de 1 à k-1. La valeur de k est de 6, 11, 16, 21 ou 26.

A titre d'exemple, les codes (29, 24), (29, 14) sont des codes raccourcis des codes BCH (31, 26) et (31, 16), le code (29, 8) est un code raccourci du code (31, 15) et le code (31, 15) est un code expurgé du code (31, 16). Par conséquent, les codes (29, 14) et (29, 8) sont des sous-codes du code (29, 24).

Le tableau suivant montre trois configurations différentes des codes utilisés en fonction de la taille de l'entête.

| Configuration | K_{L} | K_{L}' | K_{c} | J₁ | J₂ | N | K | R | Octet+ |
|---|---|---|---|---|---|---|---|---|---|
| 1 | 29 | 24 | 8 | 5 | 16 | 899 | 424 | 0,47 | 0 |
| 2 | 29 | 24 | 14 | 4 | 16 | 725 | 440 | 0,61 | 2 |
| 3 | 29 | 24 | 8 | 10 | 16 | 928 | 464 | 0,5 | 5 |

Le nombre N correspond au nombre total de bits après codage, soit N=N_{L}*N_{c}, K correspond au nombre de bits de la cellule à coder, soit K = J₁*K_{L} + J₂*K_{L}' et R correspond au rendement obtenu, soit R = K/N. La colonne Octet+ correspond au nombre d'octets rajoutés dans l'entête par rapport à la configuration de base comprenant 5 octets.

La configuration 1 correspond à celle donnée dans la figure 4. La configuration 2 correspond à celle obtenue pour un ajoût de 2 octets dans l'entête et la configuration 3 à celle obtenue pour un ajoût de 5 octets dans cet entête.

Le rajoût de ces octets est souhaitable lorsque l'on désire transmettre en même temps que la cellule ATM un certain nombre d'informations supplémentaires, tel que par exemple des données relatives à un contrôle de liaison, à de la signalisation ou à un codage CRC supplémentaire.

Il va de soi que la terminologie "code de ligne" et "code de colonne" n'est pas restrictive, c'est à dire que deux codes de colonne peuvent être appliqués successivement avant un code de ligne sur l'ensemble des données codées pour l'obtention du même résultat, à savoir une meilleure protection de l'entête. Ceci revient à intervertir les lignes et les colonnes. L'essentiel est donc d'appliquer après deux premiers codages un troisième codage dans un sens perpendiculaire à ces deux premiers codages.

Dans un mode de mise en oeuvre avantageux, il est prévu un entrelacement des lignes avant application du codage de colonne (étape c). Si deux codes de colonne sont appliqués avant un code de ligne, l'entrelacement s'opère sur les colonnes avant application d'un code de ligne. De tels entrelacements permettent de simplifier le décodage du code de colonne par le fait que le décodage du code de ligne de l'entête fournit des décisions plus fiables. En effet, ces bits décidés avec une grande fiabilité peuvent être considérés comme fixés dans les mots du code de colonne.

## Revendications

1. Procédé de codage d'un bloc de données, ledit bloc comprenant une première et une deuxième zones, ledit procédé consistant à appliquer un codage produit audit bloc et consistant notamment à :
a - appliquer un premier codage bloc à ladite première zone ;
b - appliquer un deuxième codage bloc à ladite deuxième zone;
c - appliquer un troisième codage bloc aux données obtenues lors des étapes a et b, dans un sens perpendiculaire aux deux premiers codages, de manière à avoir un bit de chaque mot desdits deux premiers codes dans un mot issu dudit troisième codage, lesdits premier, deuxième et troisième codages étant réalisés à l'aide de codes BCH de longueur n et de dimension k, lesdits codes BCH appartenant à l'une quelconque des familles suivantes : (n, k), (n, k-1), (n+1, k), (n-s, k-s) ou (n-s, k-1-s) et (n+1-s, k-s), avec k, n et s entiers et s<k, ladite première zone étant protégée par un code plus puissant que ladite deuxième zone, ledit bloc étant constitué par une cellule ATM, ladite première zone correspondant à l'entête de ladite cellule ATM et ladite deuxième zone correspondant au champ de données utiles de ladite cellule ATM.

2. Procédé selon la revendication 1, caractérisé en ce qu'il consiste à entrelacer avant ladite étape c lesdites données obtenues lors desdites étapes a et b.

3. Procédé selon l'une des revendications 1 et 2, caractérisé en ce que ledit premier codage bloc est un sous-code dudit deuxième codage bloc.
